(19) Europäisches Patentamt
European Patent Office
Office européen des brevets

(11) **EP 1 551 123 B1**

(12) **EUROPEAN PATENT SPECIFICATION**

(45) Date of publication and mention
of the grant of the patent:
**28.06.2017 Bulletin 2017/26**

(21) Application number: **02771997.0**

(22) Date of filing: **28.09.2002**

(51) Int Cl.:
**H04J 13/00** *(2011.01)*

(86) International application number:
**PCT/CN2002/000694**

(87) International publication number:
**WO 2004/030253 (08.04.2004 Gazette 2004/15)**

(54) **PREDICTION OF UPLINK RECEIVED MAIN POWER AND ADMISION CONTROL IN CDMA SYSTEM**

VORHERSAGE DER AUFWÄRTSSTRECKEN-EMPFANGSHAUPTLEISTUNG UND ZULASSUNGSSTEUERUNG IN EINEM CDMA-SYSTEM

PREDICTION D'UNE PUISSANCE PRINCIPALE RECUE DE LIAISON MONTANTE ET COMMANDE D'ADMISSION DANS UN SYSTEME AMCR

(84) Designated Contracting States:
**AT BE BG CH CY CZ DE DK EE ES FI FR GB GR IE IT LI LU MC NL PT SE SK TR**

(43) Date of publication of application:
**06.07.2005 Bulletin 2005/27**

(73) Proprietor: ZTE Corporation
**518057 Shenzhen City,
Guangdong Province (CN)**

(72) Inventors:
• **DENG, Chunmei,
4th Fl., B 1 Wing
Shenzhen,
Guangdong 518057 (CN)**
• **HUANG, Chao,
7D Room, B Wing
Shenzhen,
Guang Dong 518026 (CN)**
• **XIONG, Jianqiu
Shenzhen,
Guangdong 518057 (CN)**

(74) Representative: **Tomlinson, Edward James
Frohwitter
Patent- und Rechtsanwälte
P.O. Box 86 03 68
81630 München (DE)**

(56) References cited:
EP-A- 1 071 306    WO-A-01/93620
WO-A1-00/04649    CN-A- 1 332 545
CN-A- 1 361 606    US-A1- 2002 102 986

• KURI J ET AL: "CALL ADMISSION ON THE UPLINK OF A CDMA SYSTEM BASED ON TOTAL RECEIVED POWER" ICC '99. 1999 IEEE INTERNATIONAL CONFERENCE ON COMMUNICATIONS. CONFERENCE RECORD. VANCOUVER, CA, JUNE 6 - 10, 1999; [IEEE INTERNATIONAL CONFERENCE ON COMMUNICATIONS], NEW YORK, NY : IEEE, US, vol. 3, 6 June 1999 (1999-06-06), pages 1431-1436, XP000903610 ISBN: 978-0-7803-5285-8
• HJELM B: "Admission control in future multi-service wideband direct-sequence CDMA systems" VEHICULAR TECHNOLOGY CONFERENCE, 2000. IEEE VTS FALL VTC 2000. 52ND SEPT. 24-28, 2000, PISCATAWAY, NJ, USA,IEEE, vol. 3, 24 September 2000 (2000-09-24), pages 1086-1093, XP010524672 ISBN: 978-0-7803-6507-0
• XU H-M ET AL: 'Power Control During the Random Access procedure In the Third Generation Mobile Communication system TD-SCDMA' JOURNAL OF CHONGQING UNIVERSITY OF POSTS AND TELECOMMUNICATION vol. 13, no. 2, June 2001, pages 26 - 28, 35, XP008102353

## Description

### Field of The Invention

The present invention relates to mobile communication and more particularly, to prediction of received power and admission control in mobile communication system processing mixed services basing on Code Division Multiple Access (CDMA) technique.

### Background of The Invention

Mobile communication has been developed rapidly recently, and has become one important part of people's life in a very short period of several years. With the rapid development of Internet technology, people's desire of mobile Internet greatly impels the development of 3rd generation mobile communication system (IMT-2000). Comparing with 2nd generation mobile communication systems like GSM system, due to the demanding services of mobile online service, the type of services carried by the 3rd generation mobile communication system is no longer the simplified voice service but mixed services. For example, the type of services of WCDMA is defined in 4 classes according to quality of service (QoS): conversational class such as telephone service, IP communication service, etc., streaming class such as video data or audio data, interactive class such as online browsing, server accessing, data base visit, etc. and background class such as background E-mail distribution, downloading file, receiving detection report, etc. Because of the accessing of the mixed services, method for single service cannot be used for admission control and load control in the 3rd generation mobile communication system.

GSM system basing on time-division multiplexing adopts hard capacity, of which the characterization parameter is channel numbers, i.e., time slot numbers, and new users cannot be accessed once all time slots are occupied.

Although IS-95 system (2nd generation CDMA mobile communication system) is the same as GSM in the type of service, but completely different with GSM in technique. This system adopts Code Division Multiple Access (CDMA) technique and its channels are distinguished by code sequences. The users operate in the same time in one frequency band. All main standards of WCDMA, CDMA2000, TD-SCDMA, etc. for the 3rd generation mobile communication (3G) system adopt CDMA technique, which is also a self-interference system with the same principle of IS-95. Each user interferes with others in the system, therefore the capacity of 3G system is closely related to the degree of interference. The capacity is soft, and closely relates to the QoS. For instance, in a certain QoS circumstance, the maximum number of users accessed in a single cell of WCDMA systems is 100, and basing on the number, accesses one more user is acceptable with the only defect of a little weaker voice quality. A typical result of simulation is that the capacity increases about 50% when the requirement for voice block error rate drops from 1 % to 2%. Thus, the capacity characterization of 3G system not only simply adopts the number of channels, but also relates to the required QoS.

Although main standards (such as: WCDMA, CDMA2000, TD-SCDMA, etc.) for 3G system adopt CDMA principle, the most important difference between 3G system and IS-95 system is different type of service carried, with mixed services focusing on both voice service and packet data service. Since 3G system carries mixed services with flexible rates, the characteristic of its services is more complicated than a single voice service, and each service has totally different behavior characteristic in the system, so the transmission technique and control method of 3G CDMA systems are much different from those of IS-95 system, and evaluation to the system capacity cannot simply adopt the number of channels. It has not been unified in current publications in determining capacity characterization parameters and the method of system admission control thereof, and even no consolidated standard has been enacted by 3GPP. System control method is developed by each company basing on the standard. Therefore, that is to say, the method of admission control for mixed services of 3G system is an art presently under competition.

Because a CDMA system is also a self-interference system, interference increases when the number of users (mobile stations) in the system increases. In order to ensure the required QoS for all services, sending power should be continuously adjusted by the power control mechanism, and the sending power of each mobile station should be increased accompanying with the increase of the number of users in a same wireless environment, i.e., not only the sending power of the newly accessed current user is higher than that of the existing user with the same service in the system, but also the sending power of all accessed users in the system should be increased correspondingly, therefore the sending power of all users with the same service in the system should be increased, which results in an equal value of the power sent from each mobile station to the receiving end of the base station. The process of constant power increasing is a process of power ascending, reaching a new equilibrium point from one equilibrium point. Thus, when the users (mobile stations) in the system are increased to a certain number, it will result in a sudden power increase of avalanche. At the mean time, even if only one user is added, the required sending power of all users should be increased infinitely, which results in the total power received by the base station receiving end exceeding linear range of the liner power amplifier and the invalidation, thereby the system falls into paralysis or collapse. That is to say that the user cannot be accessed when the users (mobile stations) reach to a certain number. Therefore, adopting power as the measurement of system load and admission control is appropriate to CDMA systems.

An US patent with the patent No. US5687171" device and method for allocating radio channels in a CDMA system" disclosed a method for measuring the strength of a signal received, calculating the margin allowed for signal strength, evaluating the required power for calling, and allocating a radio channel to a requesting mobile station when the required power is less than the margin. This method is typically an admission control method for single service and symmetrical service of 2$^{nd}$ generation, and only for measuring the strength of signals received by the uplink base station; in these methods, the power ascending capacity is not considered while calculating the required power for calling service, and also the admission specialty and priority level of non-real time service and mixed services, so that the diversity requirement for the mixed services of 3G system cannot be satisfied.

A paper "Call admission on the uplink of a CDMA system based on total received power" 1999 IEEE INTERNATIONAL CONFERENCE ON COMMUNICATIONS, vol.3, 6 June 1999 (1999- 06- 06), -10 June 1999 (1999 -06 -10) pages 1431- 1436, XP002498792 by KURI J; MERMELSTEIN P, disclosed a method for call admission based on total received power. This method predicts power according to an equation which takes into account signal-to-interference ratio limits determined by a target bit error rate and a processing gain of the incoming mobile.

A paper "Admission control in future multi-service wideband direct-sequence CDMA systems" VEHICULAR TECHNOLOGY CONFERENCE, 2000, PISCATAWAY, NJ, USA, IEEE, vol.3, 24 September 2000 (2000-09-24), pages 1086-1093, XP010524672 ISBN: 978-0-7803-6507-0 by HJELM B , refers to three algorithms: RPCAC, MPCAC and PCAC. In RPCAC, the algorithm blocks new users when the received power at a base station gets too high while in MPCAC the algorithm predicts bandwidth, defined as the signal-to-interference ratio multiplied by the bit rate and determines whether the requested bandwidth is available. PCAC combines these two algorithms.

For predicting the uplink received total power, it is easy for the single service but complicated for the mixed services, because in the single service, a curve reflecting the systematic load characteristic when accessing the single service, i.e. the curve of throughput versus uplink received power (uplink received power=sending power - path loss) can be obtained by the QoS requirement. If only this type of single service exists in the system, makes interpolation on the load characteristic curve in accordance with the throughput to gain the uplink received power value after accessing the service, thereby calculates the uplink received total power value according to the total number of users and compares the uplink received total power value with admission threshold so as to judge whether the current service can be admitted or not. However, for the mixed services, since the combination of services is various and the load characteristic curve of the system is unknown, it becomes difficult in predicting the uplink received total power of the system accessing current services.

Summary of The Invention

In order to solve the above-mentioned problems, the present invention provides a method for predicting uplink received total power in CDMA systems according to claim 1 and a device for admission control in a CDMA system according to claim 23. Furthermore, the present invention also provides a method of admission control in CDMA systems accessing mixed service, which comprises: step 1, obtaining a characteristic relation curve of throughput e versus the uplink received total power in the case that only single service accessed for every kind of service, i.e. a systematic load characteristic curve for every kind of single service; step 2, obtaining current uplink received total power of a cell and service rate and signal to noise ratio of a new calling service; service rate step 3, calculating current conversion service amount in the case of single service; step 4, calculating prediction value of the uplink received total power while adding 1 to the current conversion service amount (showing accessing a new calling service); and step 5, comparing the prediction value of the uplink received total power with a preset threshold, admitting the new calling service if said prediction value is smaller than said threshold, or else rejecting it.

Moreover, the present invention also provides a device for admission control in CDMA systems accessing mixed service, which comprises: a device obtaining a characteristic relation curve of a throughput of each service versus the uplink received total power in the case that only single service is received; a device calculating current conversion service amount reaching the present uplink received total power in the case of single service of a new calling service; a device calculating prediction value of the uplink received total power while adding 1 to the current conversion service amount; and a device comparing the prediction value of the uplink received total power with a preset threshold, admitting the new calling service if said prediction value is smaller than said threshold, or else rejecting it.

At last, the present invention also provides a CDMA wireless communication system comprising the above-mentioned device for admission control.

It will be understood that the foregoing aspects and advantages of the present invention will be more fully rendered obvious by, the following detailed description of the preferred embodiments of the invention together with the accompanying drawings hereinafter:

**Brief Description of The Drawings**

Fig.1 shows a flow chart of the process of the method for predicting uplink received total power in CDMA systems accessing mixed service in accordance with an embodiment of the present invention;

Fig.2 presents a detailed flow chart of the process of "obtaining a characteristic relation curve of the throughput versus the uplink received total power" in the prediction method shown in fig. 1;

Fig.3 shows a flow chart of solving equation 1 by iterative operation;

Fig.4 shows the variation of the uplink received total power of the system while accessing several single services respectively by controlling threshold;

Fig.5A shows a characteristic relation curve of a throughput of each service versus the uplink received total power when solely accessing least square fitted 8kbps service;

Fig.5B is an error curve of least square fitting the curve shown in fig. 5A;

Fig.6A shows a characteristic relation curve of a throughput of each service versus the uplink received total power when solely accessing least square fitted 12.2kbps service;

Fig.6B is an error curve of least square fitting the curve shown in fig. 6A;

Fig.7A shows a characteristic relation curve of a throughput of each service versus the uplink received total power when solely accessing least square fitted 64kbps service;

Fig.7B is an error curve of least square fitting the curve shown in fig. 7A;

Fig.8A shows a characteristic relation curve of a throughput of each service versus the uplink received total power when solely accessing least square fitted 144kbps service;

Fig.8B is an error curve of least square fitting the curve shown in fig. 6A;

Fig. 9 shows a flow chart of the process of the method of admission control in CDMA systems accessing mixed service in accordance with an embodiment of the present invention.

**Detailed Description of The Preferred Embodiments:**

Now, preferred embodiments of the present invention will be described with reference to the accompanying drawings.

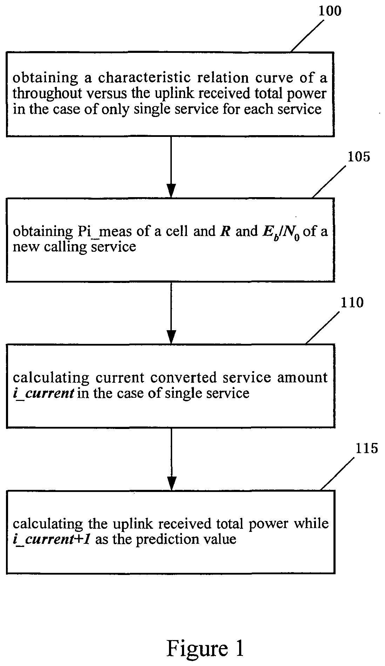

Fig.1 shows a flow chart of the process of the method for predicting uplink received total power in CDMA systems accessing mixed service in accordance with an embodiment of the present invention. As shown in fig. 1, at first at step 100, obtain a characteristic relation curve of a throughput of each service versus the uplink received total power in the case that only single service accessed. Then at step 105, obtain the present uplink received total power of a cell $p_{meas}$ and the service rate $R$ and signal to noise ratio $E_b/N_0$ of a new calling service. Further at step 110, calculate current conversion service amount $i\_current$ reaching the present uplink received total power $p_{meas}$ in the case of single service of the new calling service. And finally at step 115, calculate the prediction value of the uplink received total power while adding 1 to the current conversion service amount (i.e. admitting the new calling service) as the prediction value of the uplink received total power. The above steps will be described in details accompanying with other drawings hereinafter.

(Step 100)

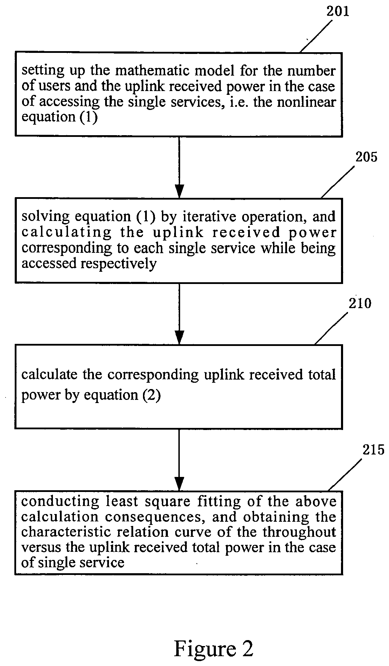

Fig.2 presents a detailed flow chart of the process of "obtaining a characteristic relation curve of the throughput versus the uplink received total power" in the prediction method according to this embodiment. It will be understood by a person skilled in this field that there might be various methods to obtain the characteristic relation curve of the throughput versus the uplink received total power, for example statistic by actual measurement. The method of this embodiment is shown as fig. 2:

(Step 201) At first, respectively set up the mathematic model for the number of users and the uplink received power in the case of accessing all the single services, i.e., set up a nonlinear equation (1) for the number of users $i$ and the uplink received power $p_i$:

$$ p_i = 10\lg(10^{0.1B_g} + A(i-1)10^{0.1p_i}) - (P_G - \frac{E_b}{N_0}) \quad dBm \quad (1) $$

wherein $p_i$ is the uplink received power value when the No. $i$ service (user) is accessed, and for CDMA systems, the uplink received powers of all services will ascend after the access of the first service, and will reach to a new equilibrium point, which is realized by power control;

$P_G$ is processing gain with the dimension of *dB*. For a WCDMA system, R(kbps) is service rate, 3840 kcps is chip rate, and the processing gain includes spreading gain and coding gain;

*Bg* is background noise, usually **-103.157dBm** (27°C in 3.84MHz frequency band), and it can be different in different cells;

*A* is a coefficient considering the adjacent cell is full, usually 1.55 (under the condition that the load of each cell is uniform distributed, and omni-directional antenna is adopted), i.e., the interference of the surrounding cell is 55% of the local cell.

(Step 205) Afterwards, solve the equation (1) by iterative operation, and calculate the uplink received power corresponding to each single service while being accessed respectively. Construct the iterative function (1-1):

$$p_i^{(k+1)} = 10\lg(10^{0.1B_g} + A(i-1)10^{0.1p_i^{(k)}}) - (P_G - \frac{E_b}{N_0}) \quad dBm \qquad (1\text{-}1)$$

wherein k is iterative times, and iterated initial value $p_1^{(0)} = B_g - (P_G - \frac{E_b}{N_0})$, and iterative converging is in the condition that the error value of each side of this equation should be smaller than **10⁻⁵**.

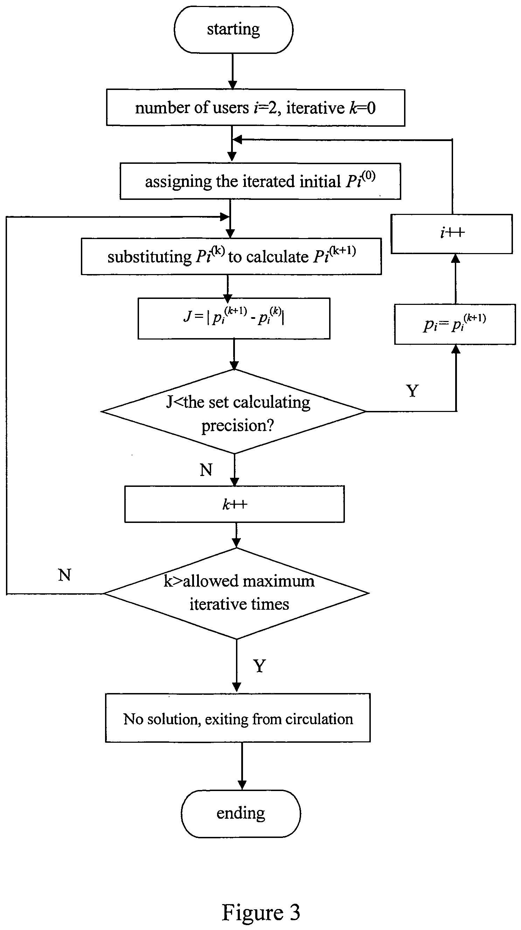

The detail method of iterative operation is herein shown in fig. 3. At first, assign the iterated initial value, substitute the iterated initial value into equation (1-1) to calculate the current iterated new value, check the absolute value **J = | $p_i^{(k+1)}$ - $p_i^{(k)}$|** of the difference between the current iterated consequence and the previous iterated consequence ( it is the iterated initial value when iteration just begins), and k is iterative times. Wherein when **J** is less than the set calculating precision, **10⁻⁵** can be chosen as the calculating precision. It means that the current calculation consequence is considered satisfying the condition to make the equation tenable when the difference is less than **10⁻⁵**, and the current iterated consequence is the solution of this equation, otherwise substitute the current iterated consequence into equation (1-1) to carry on the next iterative operation. If the iteration does not converge when exceeding the set maximum iterative times, it is considered no solution of this equation, i.e., adding one more user can result in a sudden power increase of avalanche for the system, thereby the system falls into collapse. The maximum iterative times can be set according to the computer's processing capability of the actual system, and 3000 times can be regarded as a reference value.

(Step 210) Furthermore, calculate the corresponding uplink received total power **$p_{i\_total}$** by equation (2):

$$p_{i\_total} = 10\lg(10^{-0.1B_g} + i \times 10^{0.1p_i}) \quad dBm \qquad \mathbf{(2)}$$

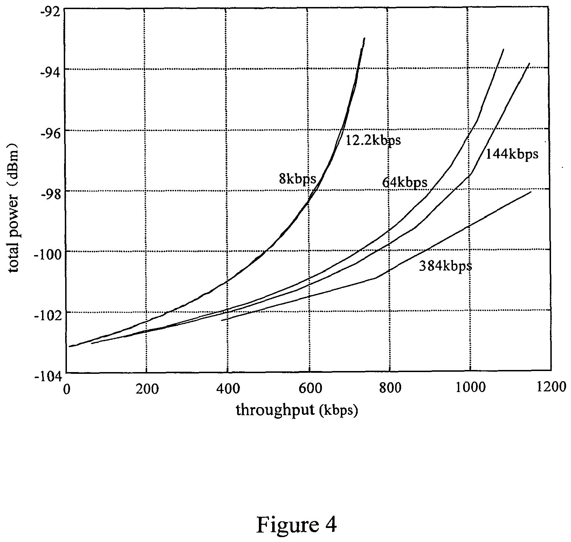

Substitute the consequence *i* and **$p_i$** of step 205 into equation (2), then obtain the corresponding uplink received total power **$p_{i\_total}$** of the system when accessing each number of *i*service. Variation of the uplink received total power of the system when accessing several single services respectively is shown in fig. 4.

(Step 215) Then conduct least square fitting of the above discrete calculation results, and obtain mathematical illustration of the characteristic relation curve of the throughput of each service versus the uplink received total power in the case of single service is received. Orthogonal polynomial can be adopted as least square fitting, and the approximation function can be calculated in accordance with the following recursion:

$$\begin{cases} q_k(x) = b_k + (x - \alpha_{k+1})q_{k+1}(x) - \beta_{k+1}q_{k+2}(x), \quad k = m, m-1, \cdots, 0 \\ q_{m+1}(x) = q_{m+2}(x) = 0 \\ y_m(x) = q_0(x) \end{cases} \qquad (3)$$

It should be noted that orthogonal least square fitting is adopted for easy degree ascending for the fitting polynomial. Since we cannot estimate the degree of the fitting polynomial beforehand, but only with coarse estimation, too higher degree polynomial fitting not only increases too much calculation, but also results in over-fitting, which is absolutely un-necessary. Thus, the commonly used method is to fit the polynomial with a lower degree, and check if the fitting error satisfies the requirement, or else ascend the degree. For ordinary least square fitting method, degree ascending will be a problem. Because it needs recalculation every time when the degree is ascended, but cannot use the calculated consequence in lower degree, which is a waste of calculation. However, orthogonal least square fitting can solve this problem. The calculation of a higher degree can be obtained by recursion from the lower degree. Therefore, there is not too much calculation for degree ascending, which particularly fits for fitting polynomial with an unknown degree.

It can be known by calculation:

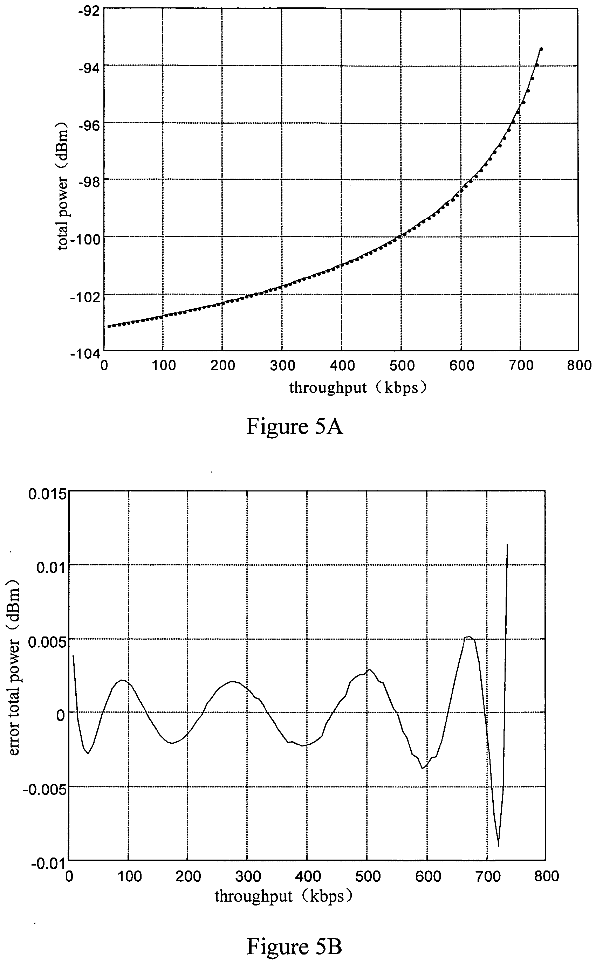

(1) The degree of the fitting polynomial of the characteristic relation curve of the throughput versus the uplink received total power is 9 times, when solely accessing 8kbps service; the fitting parameters are shown in table 1; the fitting curve is shown in fig. 5A, and the fitting error is shown in fig. 5B.

**Table 1: Fitting Parameters For 8kbps Service**

| $k$ | 0 | 1 | 2 | 3 | 4 | 5 | 6 | 7 | 8 | 9 | 10 |
|---|---|---|---|---|---|---|---|---|---|---|---|
| $b_k$ | -100.4430 | 0.0106 | $1.9447 \times 10^{-5}$ | $4.1947 \times 10^{-8}$ | $1.0021 \times 10^{-10}$ | $2.5527 \times 10^{-13}$ | $6.7815 \times 10^{-16}$ | $1.8553 \times 10^{-18}$ | $5.1871 \times 10^{-21}$ | $1.4736 \times 10^{-23}$ | $4.2322 \times 10^{-26}$ |
| $\alpha_k$ | | 372 | 372 | 372 | 372 | 372 | 372 | 372 | 372 | 372 | 372 |
| $\beta_k$ | | $4.5136 \times 10^4$ | $3.6096 \times 10^4$ | $3.4786 \times 10^4$ | $3.4328 \times 10^4$ | $3.4097 \times 10^4$ | $3.3948 \times 10^4$ | $3.3833 \times 10^4$ | $3.3732 \times 10^4$ | $3.3636 \times 10^4$ | $3.3540 \times 10^4$ |

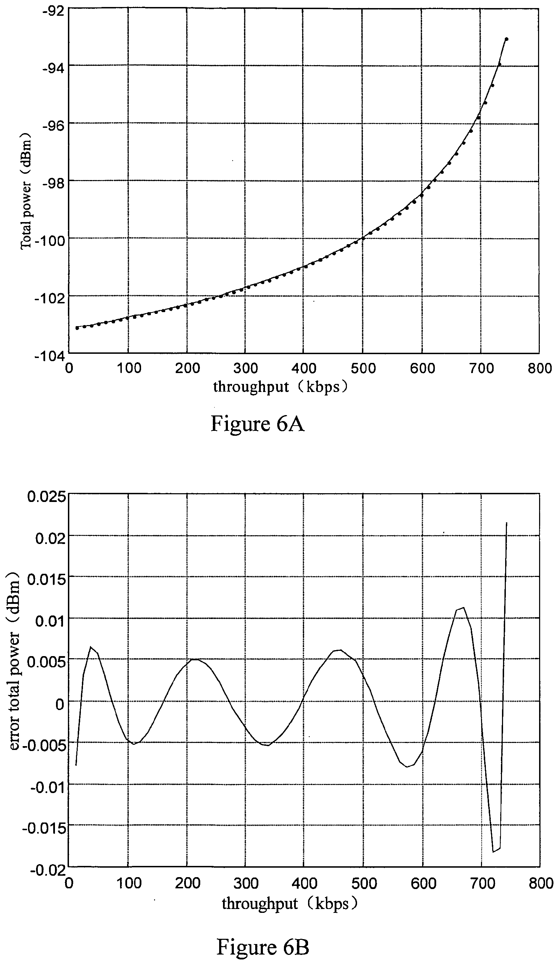

(2) The degree of the fitting polynomial of the characteristic relation curve of the throughput versus the uplink received total power is 8 times, when solely accessing 12.2kbps service; the fitting parameters are shown in table 2; the fitting curve is shown in fig. 6A, and the fitting error is shown in fig. 6B.

**Table 2: Fitting Parameters For 12.2kbps Service**

| $k$ | 0 | 1 | 2 | 3 | 4 | 5 | 6 | 7 | 8 | 9 |
|---|---|---|---|---|---|---|---|---|---|---|
| $b_k$ | -100.3703 | 0.0108 | $2.0181 \times 10^{-5}$ | $4.4351 \times 10^{-8}$ | $1.0802 \times 10^{-10}$ | $2.8039 \times 10^{-13}$ | $7.5846 \times 10^{-16}$ | $2.1101 \times 10^{-18}$ | $5.9837 \times 10^{-21}$ | $1.7156 \times 10^{-23}$ |
| $\alpha_k$ | | 378.2 | 378.2 | 378.2 | 378.2 | 378.2 | 378.2 | 378.2 | 378.2 | 378.2 |
| $\beta_k$ | | $4.6140 \times 10^4$ | $3.6883 \times 10^4$ | $3.5517 \times 10^4$ | $3.5013 \times 10^4$ | $3.4729 \times 10^4$ | $3.4519 \times 10^4$ | $3.4334 \times 10^4$ | $3.4153 \times 10^4$ | $3.3966 \times 10^4$ |

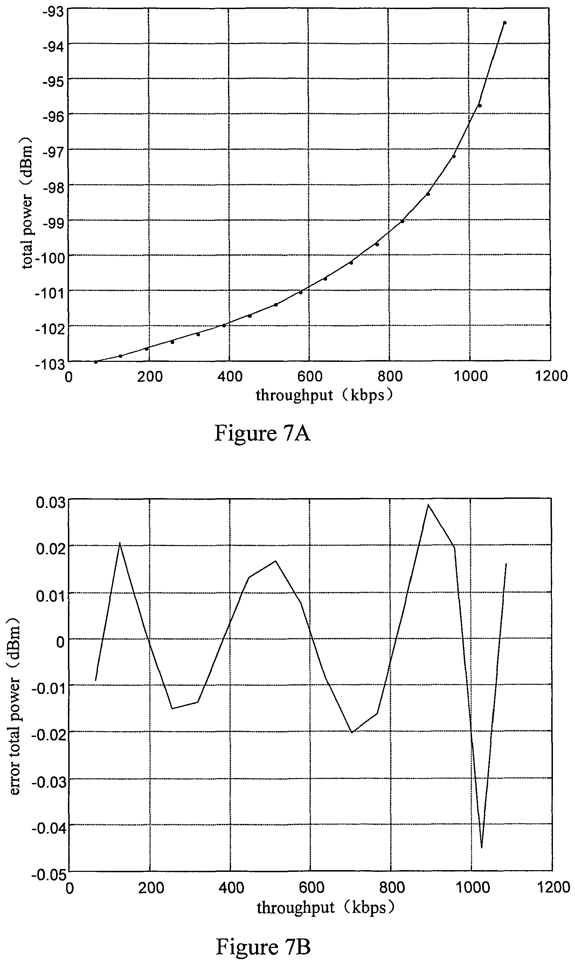

(3) The degree of the fitting polynomial of the characteristic relation curve of the throughput versus the uplink received total power is 6 times, when solely accessing 64kbps service; the fitting parameters are shown in table 3; the fitting curve is shown in fig. 7A, and the fitting error is shown in fig. 7B.

**Table 3: Fitting Parameters For 64kbps Service**

| $k$ | 0 | 1 | 2 | 3 | 4 | 5 | 6 | 7 |
|---|---|---|---|---|---|---|---|---|
| $b_k$ | -100.1989 | 0.0078 | $1.0267 \times 1_0{-}_5$ | $1.5860 \times 10^{-8}$ | $2.6817 \times 10^{-11}$ | $4.7520x 10^{-14}$ | $8.6108x 10^{-17}$ | $1.5747 \times 10^{-19}$ |
| $\alpha_k$ | | 576 | 576 | 576 | 576 | 576 | 576 | 576 |
| $\beta_k$ | | $9.8304 \times 10^4$ | $7.7824 \times 10^4$ | $7.3728 \times 10^4$ | $7.0997 \times 10^4$ | $6.8267 \times 10^4$ | $6.5221 \times 10^4$ | $6.1755 \times 10^4$ |

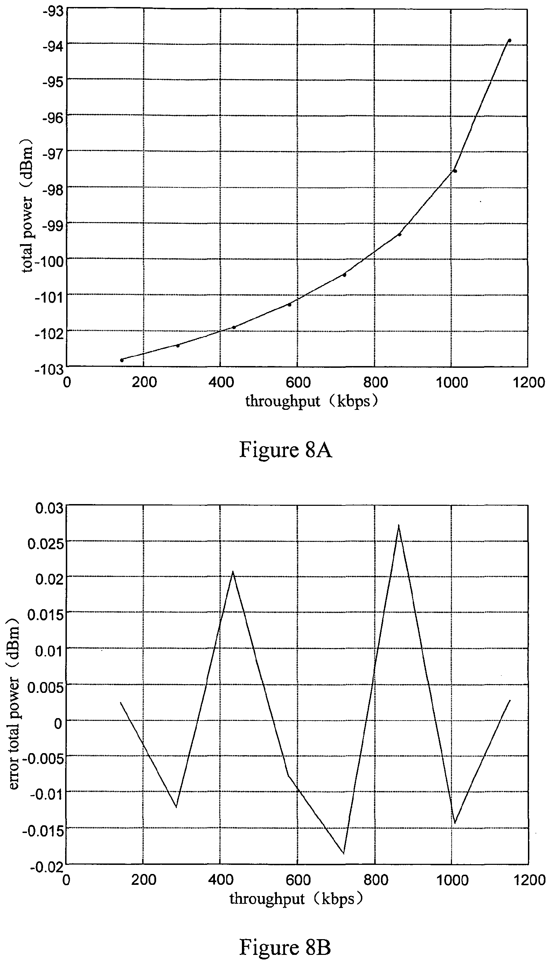

(4) The degree of the fitting polynomial of the characteristic relation curve of the throughput versus the uplink received total power is 5 times, when solely accessing 144kbps service; the fitting parameters are shown in table 4; the fitting curve is shown in fig. 8A, and the fitting error is shown in fig. 8B.

**Table 4: Fitting Parameters For 144kbps Service**

| $k$ | 0 | 1 | 2 | 3 | 4 | 5 | 6 |
|---|---|---|---|---|---|---|---|
| $b_k$ | -99.9245 | 0.0079 | $1.0154 \times 10^{-5}$ | $1.4821 \times 10^{-8}$ | $2.2817 \times 10^{-11}$ | $3.5477 \times 10^{-14}$ | $5.4385 \times 10^{-17}$ |
| $\alpha_k$ | | 648 | 648 | 648 | 648 | 648 | 648 |
| $\beta_k$ | | $1.0886 \times 10^5$ | $8.294 \times 10^4$ | $7.332 \times 10^4$ | $6.320 \times 10^4$ | $5.105 \times 10^4$ | $3.654 \times 10^4$ |

(5) When solely accessing 384kbps service, the maximum number of users is 3, so it does not need to fit the characteristic relation curve of the throughput versus the uplink received total power. The curve can be expressed by the broken line, as shown in equation (4). Throughput: x1 = 1×384 kbps , x2 = 2x384 kbps, x3 = 3×384 kbps Total power: p1=-102.280 dBm , p2=-100.890 dBm, p3=-98.115 dBm

$$\begin{cases} y - p_1 = \dfrac{p_2 - p_1}{x_2 - x_1}(x - x_1), & 1 \times 384 \leq x \leq 2 \times 384 \\[2ex] y - p_2 = \dfrac{p_3 - p_2}{x_3 - x_2}(x - x_2), & 2 \times 384 \leq x \leq 3 \times 384 \end{cases} \qquad (4)$$

(Step 105)

After obtaining the characteristic relation curve of the throughput versus the uplink received total power in the case that only single service is received, we need to obtain the present measure uplink received total power $p_{meas}$ of a cell and the service rate $R$ and required signal to noise ratio $E_b/N_0$ of a new calling service (step 105). As what is known by a person skilled in this field, these data can be obtained from the base station of the cell. For example, in 3GPP Standard the Public Measure Task specifies that the received total power of the base station of a cell is a required measure quantity, and herein we will not give further description.

(Step 110)

Next step, we need to calculate current conversion service amount *i_current* reaching the present measure uplink received total power $p_{meas}$ in the case of single service of the new calling service. A method of one embodiment of the present invention is: combining equation 1 with equation 2 , so as to obtain a non-linear system of equations (5) after equation variation, then solving it if $P_{i\_total} = p_{meas}$.

$$\begin{cases} i = 10^{-0.1P_i}(10^{0.1P_{i\_total}} - 10^{0.1B_g}) \\ p_i = 10\lg[10^{0.1B_g} + A(i-1)10^{0.1P_i}] - \left[P_{G8} - \left(\frac{E_b}{N_0}\right)_8\right] \end{cases} \tag{5}$$

Solve the non-linear system of equations by iterated operation, and Construct the following iterative function (5-1):

$$\begin{cases} i^{(k+1)} = 10^{-0.1p_i^{(k)}}(10^{0.1P_{i\_total}} - 10^{0.1B_g}) \\ p_i^{(k+1)} = 10\lg[10^{0.1B_g} + 1.55(i^{(k)} - 1)10^{0.1P_i}] - \left[P_{G8} - \left(\frac{E_b}{N_0}\right)_8\right] \end{cases} \tag{5-1}$$

Select the iterated initial value:

$$\begin{cases} i^{(0)} = 0 \\ p_i^{(0)} = B_g - P_{G8} + \left(\frac{E_b}{N_0}\right)_8 \end{cases}$$

Carry on iterated operation according to equation (5-1) and iterative converging is in the condition that the maximum error value of each side of this equation should be smaller than $10^{-5}$. The current conversion service amount *i_current* (*i_current* might not be an integer) of a single service conversion by the mixed service carried by the present system is obtained when iterative converging.

(Step 115)

At last, calculate prediction value of the uplink received total power while adding 1 to the current conversion service amount (i.e., a new calling service is received). A method of one embodiment of the present invention is:

At first, calculate the throughput while the new calling service is received:

$$T_c = (i+1) \times R;$$

Then, in accordance with $T_c$, make interpolation on the characteristic relation curve of said throughput versus the uplink received total power of the corresponding service obtained at the above step 100, and calculate the uplink received total power of the system whose power is ascended by the access of the new calling service (serial No. : *i+1*)

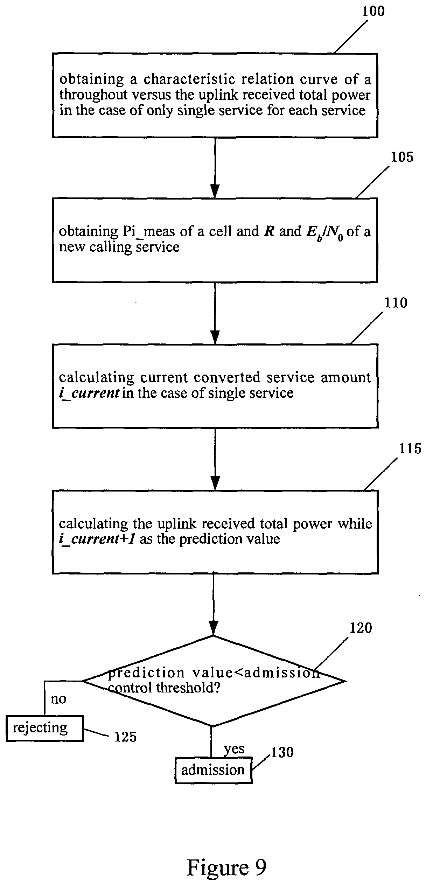

Fig. 9 shows a flow chart of the process of the method of admission control in CDMA systems accessing mixed service in accordance with another embodiment of the present invention. In which the same steps are given the same serial No. as the former steps, and corresponding descriptions are omitted. As shown in fig. 9, after the above steps 100-115, proceed to step 120, and judge if the prediction value of the uplink received total power gained from step 115 is smaller than the preset admission control threshold $p_{th}$ of the system. If so, proceed to step 130 and admit the new calling service (actuate the allocating subprocess of code resource); otherwise proceed to step 125 and reject the new calling service (perform call dropping or block treatment).

As what is known by a person skilled in this field, 3G system is usually composed of User Equipment (UE), Wireless Access Network (UTRAN) and Core Network (CN), wherein the UTRAN is made up of Radio Network Subsystem (RNS) managed by a plurality of Radio Network Controller (RNS), and each RNS is made up of one RNC and multiple Node B. RNC is employed to allocate and control radio resource of Node B connected or related to RNC.

The foregoing prediction method of the uplink received total power and admission control method of the present invention can be implemented in RNC in the form of hardware or software function module.

The feasibility and advantages of the above-mentioned method, device and system of the present invention are verified by the following experiment data:

Because we cannot assume the prediction value of the uplink received total power $p_{meas}$ in the actual system at present, substitute OPNET simulation consequence for $p_{meas}$ in the experiment:

Agreement of the symbols in the experiment is:

$N_8 \times 8kbps + N_{12 \cdot 2} \times 12.2kbps + N_{64} \times 64kbps + N_{144} \times 144kbp_S + N_{384} \times 384kbps + 1 \times T$ kbps Shows that a number of $N_8$ 8kbps services, $N_{12.2}$ 12.2kbps services, $N_{64}$ 64kbps services, $N_{144}$ 144kbps services and $N_{384}$ 384kbps services has been accessed in the system, and the newly required accessing service is $T$ kbps( $T$ = 8kbps, 12.2kbps, 64kbps, 144kbps, 384kbps )service. The experiment aims at predicting the uplink received total power of the newly required accessing service after it is received in the system. This agreement will be kept in the following experiments;

$p_{s0}$ is the system load before the access of the newly required calling service, i.e. the uplink received total power, and OPNET simulation consequence is adopted in the experiment;

$T_c$ is the throughput of the system load before the access of the newly required calling service conversion to the single service with the same service type of the newly required calling service conversion by power converting operation, c = 8kbps, 12.2kbps, 64kbps, 144kbps, 384kbps;

$\hat{p}$ is the prediction value of the uplink received total power of the system after the access of the newly required calling service estimated by the method provided in the present invention;

$p_s$ is the uplink received total power of the system after the access of the newly required calling service obtained by OPNET simulation; $\dfrac{\left|p_s - \hat{p}\right|(mw)}{p_s(mw)} \times 100\%$ is the relative error of the predicted power versus OPNET simulation consequence;

$T$ is delay CPU time of admission determination treatment.

**Experiment 1:**

**Case1A: 41×8kbps**

It shows accessing 41 8kbps services in the case of single service, and the uplink received total power of the system accessing No. 41 8kbps service can be calculated by formulas (1) and (5) in a single service:

$$\hat{p} = -101.524 dBm$$

| $\hat{p}_{(dBm)}$ | $p_s$ (dBm) | $\dfrac{\left\|p_s - \hat{p}\right\|(mw)}{p_s(mw)} \times 100\%$ | $T$ (ms) |
|---|---|---|---|
| -101.524 | -101.521 | 0.07% | 10 |

**Case 1B** : **41×8kbps** + **1×144kbps**

| $p_{s0}$ (dBm) | $T_{144}$ (kbps) | $\hat{p}$ (dBm) | $p_s$ (dBm) | $\dfrac{\|p_s - \hat{p}\|(mw)}{p_s(mw)} \times 100\%$ | $T$ (ms) |
|---|---|---|---|---|---|
| -101.521 | 3.600x 144 | -100.765 | -100.775 | 0.23% | 20 |

**Case 1C : 41×8kbps** + **1×144kbps** + **1×8kbps**

| $p_{s0}$ (dBm) | $T_8$(kbps) | $\hat{p}$ (dBm) | $p_s$ (dBm) | $\dfrac{\|p_s - \hat{p}\|(mw)}{p_s(mw)} \times 100\%$ | $T$ (ms) |
|---|---|---|---|---|---|
| -100.775 | 52.542×8 | -100.700 | -100.714 | 0.32% | 20 |

**Case 1D** : **41×8kbps** + **1×144kbps** + **1×8kbps** + **1×64kbps**

| $p_{s0}$ (dBm) | $T_{64}$(kbps) | $\hat{p}$ (dBm) | $p_s$ (dBm) | $\dfrac{\|p_s - \hat{p}\|(mw)}{p_s(mw)} \times 100\%$ | $T$ (ms) |
|---|---|---|---|---|---|
| -100.714 | 9.863×64 | -100.253 | -100.265 | 0.28% | 20 |

**Experiment 2:**

**Case 2A : 20×8kbps** + **10×12.2kbps** + **1×64kbps** + **1×8kbps**

| $p_{s0}$ (dBm) | $T_8$(kbps) | $\hat{p}$ (dBm) | $p_s$ (dBm) | $\dfrac{\|p_s - \hat{p}\|(mw)}{p_s(mw)} \times 100\%$ | $T$ (ms) |
|---|---|---|---|---|---|
| -101.550 | 40.527×8 | -101.494 | -101.494 | 0 | 20 |

**Case 2B : 20×8kbps** + **10×12.2kbps** + **1×64kbps** + **1×8kbps**

| $p_{s0}$ (dBm) | $T_{12.2}$(kbps) | $\hat{p}$ (dBm) | $p_s$ (dBm) | $\dfrac{\|p_s - \hat{p}\|(mw)}{p_s(mw)} \times 100\%$ | $T$ (ms) |
|---|---|---|---|---|---|
| -101.550 | 26.716×12.2 | -101.459 | -101.454 | 0.12% | 20 |

**Case 2C : 20×8kbps** + **10×12.2kbps** + **1×64kbps** + **1×64kbps**

| $p_{s0}$(dBm) | $T_{64}$ (kbps) | $\hat{p}$(dBm) | $p_s$(dBm) | $\dfrac{\|p_s - \hat{p}\|(mw)}{p_s(mw)} \times 100\%$ | $T$(ms) |
|---|---|---|---|---|---|
| -101.550 | 7.493×64 | -101.242 | -101.229 | 0.30% | 20 |

**Case 2D : 20×8*kbps* + 10×12.2*kbps* + 1×64*kbps* + 1×144*kbps***

| $p_{s0}$ (dBm) | $T_{144}$ (kbps) | $\hat{p}$ (dBm) | $p_s$ (dBm) | $\dfrac{\left\| p_s - \hat{p} \right\| (mw)}{p_s (mw)} \times 100\%$ | $T$ (ms) |
|---|---|---|---|---|---|
| -101.550 | 3.558 | -100.800 | -100.830 | 0.69% | 20 |

**Case 2E : 20×8*kbps* + 10×12.2*kbps* + 1×64*kbps* + 1×384*kbps***

| $p_{s0}$ (dBm) | $T_{384}$ (kbps) | $\hat{p}_{(dBm)}$ | $p_s$ (dBm) | $\dfrac{\left\| p_s - \hat{p} \right\| (mw)}{p_s (mw)} \times 100\%$ | $T$ (ms) |
|---|---|---|---|---|---|
| -101.550 | 1.590 | -99.252 | -99.566 | 0.32% | 20 |

It is shown by the consequence of the above two experiments that the predicted power value obtained on the basis of the power prediction method provided by the present invention is quite close to OPNET simulation consequence, and $p < P_{th}$ ($p_{th}$ = -93dBm), which indicates all users newly requiring access in the above experiments are acceptable without leading the system into collapse. The adequate approximation between the prediction value and OPNET simulation consequence also verifies the correction of the method provided by the present invention. The CPU time occupied for calculation is at millisecond, which satisfies the delay requirement in actual system processing.

From the foregoing, the present invention has been illustrated in details accompanying with some exemplary embodiments. It should be noted that the above embodiments are not exhaustive nor limit to the present invention. Various variations and modifications can be realized within the present invention by one skilled in the art. Besides, although some part of the foregoing descriptions and data aim at WCDMA systems, the principles and solved problems of the present invention are not limited to WCDMA systems, but applicable in all wireless communication systems basing on CDMA technique.

**Claims**

1. A method for predicting uplink received total power in a CDMA system accessed by mixed services, comprising:

    step 1, obtaining for each service a characteristic curve of throughput versus uplink received total power in the case of access only using that single service;
    step 2, obtaining a present uplink received total power of a cell, and a desired service rate and signal to noise ratio of a new calling service;
    step 3, calculating for the service of the new calling service only a service amount in number of users which would result in a received total power corresponding to the present uplink received total power using said characteristic curve of the new calling service, the service amount calculated being termed the equivalent service amount; and
    step 4, calculating a prediction value of the uplink received total power by adding one to the equivalent service amount at said service rate and using said characteristic curve of the new calling service determining the uplink received total power which would correspond to the equivalent service amount plus one at said service rate.

2. The method for predicting uplink received total power according to claim 1, wherein the step 1 comprises:

    i) obtaining a corresponding uplink received total power while accessing by each single service respectively;
    ii) fitting results obtained from the foregoing step i) to obtain the characteristic curve of the throughput versus the uplink received total power in the case of single service.

3. The method for predicting uplink received total power according to claim 2, wherein the step i) comprises:

    i-1) calculating the corresponding uplink received power while accessing by each single service respectively;

i-2) calculating the uplink received total power respectively corresponding to the uplink received power at step i-1).

4.  The method for predicting uplink received total power according to claim 3, wherein the step i-1) is calculated by equation:

$$p_i = 10 \lg(10^{0.1B_g} + A(i-1)10^{0.1p_i}) - (P_G - \frac{E_b}{N_0})$$

where $i$ is the equivalent service amount, $p_i$ is the uplink received power corresponding to the equivalent service amount, $P_G$ is processing gain, $Bg$ is background noise, $A$ is an interference coefficient of adjacent cells, and $\frac{E_b}{N_0}$ is signal to noise ratio of the new calling service; and
the step i-2) is calculated by equation:

$$p_{i\_total} = 10 \lg(10^{-0.1B_g} + i \times 10^{0.1p_i})$$

where $p_{i\_total}$ is the uplink received total power corresponding to the $p_i$.

5.  The method for predicting uplink received total power according to claim 4, wherein the first equation is solved by iterative operation in the step i-1), that is:

$$p_i^{(k+1)} = 10 \lg(10^{0.1B_g} + A(i-1)10^{0.1p_i^{(k)}}) - (P_G - \frac{E_b}{N_0})$$

where k is iterative times, and iterated initial value $p_1^{(0)} = B_g - (P_G - \frac{E_b}{N_0})$.

6.  The method for predicting uplink received total power according to claim 2, wherein the fitting in the step ii) is the least square fit.

7.  The method for predicting uplink received total power according to claim 1, wherein the equivalent service amount is calculated in the step 3 by equations:

$$p_i = 10 \lg(10^{0.1B_g} + A(i-1)10^{0.1p_i}) - (P_G - \frac{E_b}{N_0})$$

$$p_{i\_total} = 10 \lg(10^{-0.1B_g} + i \times 10^{0.1p_i})$$

where i is the equivalent service amount, $p_i$ is the uplink received power corresponding to the equivalent service amount, $P_G$ is processing gain, $B_g$ is background noise, A is interference coefficient of adjacent cells, $\frac{E_b}{N_0}$ is signal to noise ratio of the new calling service, and $p_{i\_total}$ is the uplink received total power.

8.  The method for predicting uplink received total power according to claim 7, wherein the equivalent service amount is calculated in the step 3 by a system of equations obtained by simultaneous equations:

$$\begin{cases} i = 10^{-0.1 p_i}(10^{0.1 P_{i\_total}} - 10^{0.1 B_g}) \\ p_i = 10 \lg[10^{0.1 B_g} + A(i-1)10^{0.1 P_i}] - \left[ P_{G8} - \left(\frac{E_b}{N_0}\right)_8 \right] \end{cases}$$

**9.** The method for predicting uplink received total power according to claim 8, wherein the equivalent service amount is calculated in the step 3 by iterating the system of simultaneous equations:

$$\begin{cases} i^{(k+1)} = 10^{-0.1 p_i^{(k)}}(10^{0.1 P_{i\_total}} - 10^{0.1 B_g}) \\ p_i^{(k+1)} = 10 \lg[10^{0.1 B_g} + A(i^{(k)}-1)10^{0.1 P_i}] - \left[ P_{G8} - \left(\frac{E_b}{N_0}\right)_8 \right] \end{cases}$$

where the iterated initial value is:

$$\begin{cases} i^{(0)} = 1.0 \\ p_i^{(0)} = B_g - P_{G8} + \left(\frac{E_b}{N_0}\right)_8 \end{cases}$$

**10.** The method for predicting uplink received total power according to claim 1, wherein the step 4 comprises:

   a) calculating predicted throughput while adding one to the equivalent service amount;
   b) calculating the prediction value of the uplink received total power of the system corresponding to the predicted throughput.

**11.** The method for predicting uplink received total power according to claim 10, wherein prediction of the uplink received total power corresponding to the predicted throughput is calculated at the step b) by making an interpolation to the characteristic curve of said throughput versus the uplink received total power.

**12.** The method according to claim 1, further comprising:

   step 5, comparing the prediction value of the uplink received total power with a preset threshold, admitting the new calling service if said prediction value is smaller than said preset threshold, or else rejecting it.

**13.** The method according to claim 12, wherein the step 1 comprises:

   i) obtaining a corresponding uplink received total power while accessing by each single service respectively;
   ii) fitting results obtained from the foregoing step i) to obtain a mathematical illustration of the characteristic curve of the throughput versus the uplink received total power in the case of single service.

**14.** The method according to claim 13, wherein the step i) comprises:

   i-1) calculating corresponding uplink received power while accessing by each single service respectively;
   i-2) calculating the uplink received total power respectively corresponding to the uplink received power at step i -1).

**15.** The method according to claim 14, wherein the step i-1) is calculated by equation:

$$p_i = 10 \lg(10^{0.1 B_g} + A(i-1)10^{0.1 p_i}) - (P_G - \frac{E_b}{N_0})$$

where $i$ is the equivalent service amount, $p_i$ is the uplink received power corresponding to the equivalent service amount, $P_G$ is processing gain, $B_g$ is background noise, A is interference coefficient of adjacent cells, and $\dfrac{E_b}{N_0}$ is signal to noise ratio of the new calling service; and
the step i-2) is calculated by equation:

$$p_{i\_total} = 10 \lg(10^{-0.1B_g} + i \times 10^{0.1p_i})$$

where $p_{i\_total}$ is the uplink received total power corresponding to the $p_i$.

**16.** The method according to claim 15, wherein the first equation is solved by iterative operation in the step i-1), that is:

$$p_i^{(k+1)} = 10 \lg(10^{0.1B_g} + A(i-1)10^{0.1p_i^{(k)}}) - (P_G - \frac{E_b}{N_0})$$

where $k$ is iterative times, and iterated initial value $p_i^{(0)} = B_g - (P_G - \frac{E_b}{N_0})$.

**17.** The method according to claim 13, wherein the fitting in the step ii) is the least square fit.

**18.** The method according to claim 12, wherein the equivalent service amount is calculated in the step 3 by equations:

$$p_i = 10 \lg(10^{0.1B_g} + A(i-1)10^{0.1p_i}) - (P_G - \frac{E_b}{N_0})$$

$$p_{i\_total} = 10 \lg(10^{-0.1B_g} + i \times 10^{0.1p_i})$$

where $i$ is the equivalent service amount, $p_i$ is the uplink received power corresponding to the equivalent service amount, $P_G$ is processing gain, $B_g$ is background noise, $A$ is interference coefficient of a adjacent cells, $\dfrac{E_b}{N_0}$ is signal to noise ratio of the new calling service, and $p_{i\_total}$ is the uplink received total power.

**19.** The method according to claim 18, wherein the equivalent service amount is calculated in the step 3 by a system of equations obtained by simultaneous equations

$$\begin{cases} i = 10^{-0.1p_i}(10^{0.1p_{i\_total}} - 10^{0.1B_g}) \\ p_i = 10 \lg[10^{0.1B_g} + A(i-1)10^{0.1P_i}] - \left[ P_{G8} - \left(\frac{E_b}{N_0}\right)_8 \right] \end{cases}$$

**20.** The method according to claim 19, wherein the equivalent service amount is calculated in the step 3 by iterating the system of simultaneous equations:

$$\begin{cases} i^{(k+1)} = 10^{-0.1p_i^{(k)}}(10^{0.1P_{i\_total}} - 10^{0.1B_g}) \\ p_i^{(k+1)} = 10\lg[10^{0.1B_g} + A(i^{(k)} - 1)10^{0.1P_i}] - \left[P_{G8} - \left(\dfrac{E_b}{N_0}\right)_8\right] \end{cases}$$

where the iterated initial value is:

$$\begin{cases} i^{(0)} = 1.0 \\ p_i^{(0)} = B_g - P_{G8} + \left(\dfrac{E_b}{N_0}\right)_8 \end{cases}$$

21. The method according to claim 12, wherein the step 4 comprises:

a) calculating predicted throughput while adding one to the equivalent service amount;
b) calculating the prediction value of the uplink received total power of the system corresponding to the predicted throughput.

22. The method according to claim 21, wherein prediction of the uplink received total power is calculated corresponding to the predicted throughput in the step b) by making interpolation to the characteristic curve of said throughput versus the uplink received total power.

23. A device for admission control in a CDMA accessed by mixed services, comprising:

means adapted to obtain for each service a characteristic curve of throughput versus uplink received total power in the case of access only using that single service; means adapted to obtain a present uplink received total power of a cell, and a desired service rate and signal to noise ratio of a new calling service; means adapted to calculate for the service of the new calling service a service amount in number of users which would result in a received total power corresponding to the present uplink received total power, the service amount calculated being termed the equivalent service amount; means adapted to calculate a prediction value of the uplink received total power while adding one to the equivalent service amount at said service rate and using said characteristic curve of the new calling service determining the uplink received total power which would correspond to the equivalent service amount plus one at said service rate; and means adapted to compare the prediction value of the uplink received total power with a preset threshold, and to admit the new calling service if said prediction value is smaller than said preset threshold, or else to reject it.

24. A CDMA wireless communication system comprising a wireless network controller with the device for admission control in accordance with claim 23.


**Patentansprüche**

1. Verfahren zum Vorhersagen der empfangenen Aufwärtsstreckengesamtleistung in einem CDMA-System, auf das durch gemischte Dienste zugegriffen wird, das Folgendes umfasst:

Schritt 1, Ermitteln einer Kennlinie des Durchsatzes versus die empfangenen Aufwärtsstreckengesamtleistung für jeden Dienst im Fall eines Zugriffs, der lediglich diesen einzelnen Dienst verwendet;
Schritt 2, Ermitteln einer vorhandenen, empfangenen Aufwärtsstreckengesamtleistung einer Zelle und einer gewünschten Dienstgeschwindigkeit und eines Signal-Rauschabstands eines neuen, anfordernden Dienstes;
Schritt 3, Berechnen lediglich eines Dienstumfangs in Form einer Anzahl der Anwender, der eine empfangene Gesamtleistung ergeben würde, die der vorhandenen, empfangenen Aufwärtsstreckengesamtleistung entspricht, für den Dienst des neuen, anfordernden Dienstes unter Verwendung der Kennlinie des neuen, anfordernden Dienstes, wobei der berechnete Dienstumfang der äquivalente Dienstumfang genannt wird; und
Schritt 4, Berechnen eines Vorhersagewertes der empfangenen Aufwärtsstreckengesamtleistung durch Addieren von eins zum äquivalenten Dienstumfang bei der Dienstgeschwindigkeit und unter Verwendung der Kennlinie des neuen, anfordernden Dienstes, wobei die empfangene Aufwärtsstreckengesamtleistung bestimmt wird, die dem äquivalenten Dienstumfang plus eins bei der Dienstgeschwindigkeit entsprechen würde.

2. Verfahren zum Vorhersagen der empfangenen Aufwärtsstreckengesamtleistung nach Anspruch 1, wobei der Schritt 1 Folgendes umfasst:

   i) Ermitteln einer entsprechenden, empfangenen Aufwärtsstreckengesamtleistung jeweils während des Zugreifens durch jeden einzelnen Dienst;
   ii) Anpassen der Ergebnisse, die im vorhergehenden Schritt i) ermittelt wurden, um die Kennlinie des Durchsatzes versus die empfangenen Aufwärtsstreckengesamtleistung im Fall eines einzelnen Dienstes zu ermitteln.

3. Verfahren zum Vorhersagen der empfangenen Aufwärtsstreckengesamtleistung nach Anspruch 2, wobei der Schritt i) Folgendes umfasst:

   i-1) Berechnen der entsprechenden, empfangenen Aufwärtsstreckenleistung jeweils während des Zugreifens durch jeden einzelnen Dienst;
   i-2) Berechnen der empfangenen Aufwärtsstreckengesamtleistung, die jeweils der empfangenen Aufwärtsstreckenleistung in Schritt i-1) entspricht.

4. Verfahren zum Vorhersagen der empfangenen Aufwärtsstreckengesamtleistung nach Anspruch 3, wobei der Schritt i-1) durch die folgende Gleichung berechnet wird:

$$p_i = 10 \lg \left( 10^{0,1Bg} + A \left( i - 1 \right) 10^{0,1p_i} \right) - \left( P_G - \frac{E_b}{N_0} \right),$$

wobei $i$ der äquivalente Dienstumfang ist, $p_i$ die empfangene Aufwärtsstreckenleistung ist, die dem äquivalenten Dienstumfang entspricht, $P_G$ der Verarbeitungsgewinn ist, $B_g$ das Hintergrundrauschen ist, $A$ ein Überlagerungskoeffizient benachbarter Zellen ist und $\frac{E_b}{N_0}$ der Signal-Rauschabstand des neuen, anfordernden Dienstes ist; und der Schritt i-2) durch die folgende Gleichung berechnet wird:

$$p_{i\_total} = 10 \lg \left( 10^{-0,1Bg} + i \times 10^{0,1p_i} \right),$$

wobei $p_{i\_total}$ die empfangene Aufwärtsstreckengesamtleistung ist, die dem $p_i$ entspricht.

5. Verfahren zum Vorhersagen der empfangenen Aufwärtsstreckengesamtleistung nach Anspruch 4, wobei die erste Gleichung im Schritt i-1) durch eine iterative Operation gelöst wird, die wie folgt ist:

$$P_i^{(k+1)} = 10 \lg \left( 10^{0,1Bg} + A \left( i - 1 \right) 10^{0,1p_i^{(k)}} \right) - \left( P_G - \frac{E_b}{N_0} \right),$$

wobei k die iterativen Wiederholungen angibt und der iterierte Anfangswert $p_i^{(0)} = B_g - \left( P_G - \frac{E_b}{N_0} \right)$ ist.

6. Verfahren zum Vorhersagen der empfangenen Aufwärtsstreckengesamtleistung nach Anspruch 2, wobei das Anpassen im Schritt ii) die Anpassung nach dem Verfahren der kleinsten Quadrate ist.

7. Verfahren zum Vorhersagen der empfangenen Aufwärtsstreckengesamtleistung nach Anspruch 1, wobei der äquivalente Dienstumfang im Schritt 3 durch die folgenden Gleichungen berechnet wird:

$$p_i \;=\; 10 \lg \left(10^{0,1B_g} \;+\; A\,(i-1)\,10^{0,1p_i}\right) \;-\; \left(P_G - \frac{E_b}{N_0}\right),$$

$$p_{i\_total} \;=\; 10 \lg \left(10^{-0,1B_g} \;+\; i \times 10^{0,1p_i}\right),$$

wobei $i$ der äquivalente Dienstumfang ist, $p_i$ die empfangene Aufwärtsstreckenleistung ist, die dem äquivalenten Dienstumfang entspricht, $P_G$ der Verarbeitungsgewinn ist, $B_g$ das Hintergrundrauschen ist, $A$ ein Überlagerungskoeffizient benachbarter Zellen ist, $\frac{E_b}{N_0}$ der Signal-Rauschabstand des neuen, anfordernden Dienstes ist und $p_{i\_total}$ die empfangene Aufwärtsstreckengesamtleistung ist.

**8.** Verfahren zum Vorhersagen der empfangenen Aufwärtsstreckengesamtleistung nach Anspruch 7, wobei der äquivalente Dienstumfang im Schritt 3 durch ein Gleichungssystem berechnet wird, die durch die folgenden simultanen Gleichungen ermittelt wird:

$$\begin{cases} i \;=\; 10^{-0,1p_i}\left(10^{0,1p_{i\_total}} - 10^{0,1B_g}\right) \\[2ex] p_i \;=\; 10 \lg\left[10^{0,1B_g} + A\,(i-1)\,10^{0,1P_i}\right] - \left[P_{G8} - \left(\frac{E_b}{N_0}\right)_8\right] \end{cases}$$

**9.** Verfahren zum Vorhersagen der empfangenen Aufwärtsstreckengesamtleistung nach Anspruch 8, wobei der äquivalente Dienstumfang im Schritt 3 durch Iterieren des Systems der folgenden simultanen Gleichungen berechnet wird:

$$\begin{cases} i^{(k+1)} \;=\; 10^{-0,1p_i^{(k)}}\left(10^{0,1p_{i\_total}} - 10^{0,1B_g}\right) \\[2ex] p_i^{(k+1)} \;=\; 10 \lg\left[10^{0,1B_g} + A\left(i^{(k)}-1\right)10^{0,1P_i}\right] - \left[P_{G8} - \left(\frac{E_b}{N_0}\right)_8\right] \end{cases}$$

wobei der iterierte Anfangswert wie folgt ist:

$$\begin{cases} i^{(0)} \;=\; 1,0 \\[2ex] p_i^{(0)} \;=\; B_g - P_{G8} + \left(\frac{E_b}{N_0}\right)_8 \end{cases}$$

**10.** Verfahren zum Vorhersagen der empfangenen Aufwärtsstreckengesamtleistung nach Anspruch 1, wobei der Schritt 4 Folgendes umfasst:

a) Berechnen des vorhergesagten Durchsatzes während zum äquivalenten Dienstumfang eins addiert wird;
b) Berechnen des Vorhersagewertes der empfangenen Aufwärtsstreckengesamtleistung des Systems, die dem vorhergesagten Durchsatz entspricht.

**11.** Verfahren zum Vorhersagen der empfangenen Aufwärtsstreckengesamtleistung nach Anspruch 10, wobei die Vorhersage der empfangenen Aufwärtsstreckengesamtleistung, die dem vorhergesagten Durchsatz entspricht, im Schritt b) durch Durchführen einer Interpolation der Kennlinie des Durchsatzes versus die empfangene Aufwärtsstreckengesamtleistung berechnet wird.

**12.** Verfahren nach Anspruch 1, das ferner Folgendes umfasst:

Schritt 5, Vergleichen des Vorhersagewertes der empfangenen Aufwärtsstreckengesamtleistung mit einem vorgegebenen Schwellenwert, wobei der neue, anfordernde Dienst zugelassen wird, wenn der Vorhersagewert kleiner als der vorgegebene Schwellenwert ist, oder andernfalls der Dienst abgelehnt wird.

**13.** Verfahren nach Anspruch 12, wobei der Schritt 1 Folgendes umfasst:

i) Ermitteln einer entsprechenden, empfangenen Aufwärtsstreckengesamtleistung jeweils während des Zugreifens durch jeden einzelnen Service;

ii) Anpassen der Ergebnisse, die im vorhergehenden Schritt i) ermittelt wurden, um eine mathematische Veranschaulichung der Kennlinie des Durchsatzes versus die empfangenen Aufwärtsstreckengesamtleistung im Fall eines einzelnen Dienstes zu ermitteln.

**14.** Verfahren nach Anspruch 13, wobei der Schritt i) Folgendes umfasst:

i-1) Berechnen der entsprechenden, empfangenen Aufwärtsstreckenleistung jeweils während des Zugreifens durch jeden einzelnen Dienst;

i-2) Berechnen der empfangenen Aufwärtsstreckengesamtleistung, die jeweils der empfangenen Aufwärtsstreckenleistung in Schritt i-1) entspricht.

**15.** Verfahren nach Anspruch 14, wobei der Schritt i-1) durch die folgende Gleichung berechnet wird:

$$p_i = 10 \lg \left(10^{0,1 B_g} + A\left(i-1\right) 10^{0,1 p_i}\right) - \left(P_G - \frac{E_b}{N_0}\right)$$

wobei $i$ der äquivalente Dienstumfang ist, $p_i$ die empfangene Aufwärtsstreckenleistung ist, die dem äquivalenten Dienstumfang entspricht, $P_G$ der Verarbeitungsgewinn ist, $B_g$ das Hintergrundrauschen ist, $A$ ein Überlagerungskoeffizient benachbarter Zellen ist und $\frac{E_b}{N_0}$ der Signal-Rauschabstand des neuen, anfordernden Dienstes ist; und

der Schritt i-2) durch die folgende Gleichung berechnet wird:

$$p_{i\_total} = 10 \lg \left(10^{-0,1 B_g} + i \times 10^{0,1 p_i}\right)$$

wobei $p_{i\_total}$ die empfangene Aufwärtsstreckengesamtleistung ist, die dem $p_i$ entspricht.

**16.** Verfahren nach Anspruch 15, wobei die erste Gleichung im Schritt i-1) durch eine iterative Operation gelöst wird, die wie folgt ist:

$$p_i^{(k+1)} = 10 \lg \left(10^{0,1 B_g} + A\left(i-1\right) 10^{0,1 p_i^{(k)}}\right) - \left(P_G - \frac{E_b}{N_0}\right),$$

wobei k die iterativen Wiederholungen angibt und der iterierte Anfangswert $p_i^{(0)} = B_g - \left(P_G - \frac{E_b}{N_0}\right)$ ist.

**17.** Verfahren nach Anspruch 13, wobei das Anpassen im Schritt ii) die Anpassung nach dem Verfahren der kleinsten Quadrate ist.

**18.** Verfahren nach Anspruch 12, wobei der äquivalente Dienstumfang in Schritt 3 durch die folgenden Gleichungen berechnet wird:

$$p_i = 10 \lg \left(10^{0,1 B_g} + A\left(i-1\right) 10^{0,1 p_i}\right) - \left(P_G - \frac{E_b}{N_0}\right),$$

$$p_{i\_total} = 10\lg\left(10^{-0,1Bg} + i \times 10^{0,1pi}\right),$$

wobei $i$ der äquivalente Dienstumfang ist, $p_i$ die empfangene Aufwärtsstreckenleistung ist, die dem äquivalenten Dienstumfang entspricht, $P_G$ der Verarbeitungsgewinn ist, $B_g$ das Hintergrundrauschen ist, $A$ ein Überlagerungskoeffizient benachbarter Zellen ist, $\dfrac{E_b}{N_0}$ der Signal-Rauschabstand des neuen, anfordernden Dienstes ist und $p_{i\_total}$ die empfangene Aufwärtsstreckengesamtleistung ist.

**19.** Verfahren nach Anspruch 18, wobei der äquivalente Dienstumfang im Schritt 3 durch ein Gleichungssystem berechnet wird, die durch die folgenden simultanen Gleichungen ermittelt wird:

$$\begin{cases} i = 10^{-0,1pi}\left(10^{0,1pi\_total} - 10^{0,1Bg}\right) \\ p_i = 10\lg\left[10^{0,1Bg} + A\left(i - 1\right)10^{0,1Pi}\right] - \left[P_{G8} - \left(\dfrac{E_b}{N_0}\right)_8\right] \end{cases}$$

**20.** Verfahren nach Anspruch 19, wobei der äquivalente Dienstumfang im Schritt 3 durch Iterieren des Systems der folgenden simultanen Gleichungen berechnet wird:

$$\begin{cases} i^{(k+1)} = 10^{-0,1pi^{(k)}}\left(10^{0,1pi\_total} - 10^{0,1Bg}\right) \\ p_i^{(k+1)} = 10\lg\left[10^{0,1Bg} + A\left(i^{(k)} - 1\right)10^{0,1Pi}\right] - \left[P_{G8} - \left(\dfrac{E_b}{N_0}\right)_8\right] \end{cases}$$

wobei der iterierte Anfangswert wie folgt ist:

$$\begin{cases} i^{(0)} = 1,0 \\ p_i^{(0)} = B_g - P_{G8} + \left(\dfrac{E_b}{N_0}\right)_8 \end{cases}$$

**21.** Verfahren nach Anspruch 12, wobei der Schritt 4 Folgendes umfasst:

a) Berechnen des vorhergesagten Durchsatzes während zum äquivalenten Dienstumfang eins addiert wird;
b) Berechnen des Vorhersagewertes der empfangenen Aufwärtsstreckengesamtleistung des Systems, die dem vorhergesagten Durchsatz entspricht.

**22.** Verfahren nach Anspruch 21, wobei die Vorhersage der empfangenen Aufwärtsstreckengesamtleistung im Schritt b) entsprechend dem vorhergesagten Durchsatz durch Durchführen einer Interpolation der Kennlinie des Durchsatzes versus die empfangene Aufwärtsstreckengesamtleistung berechnet wird.

**23.** Vorrichtung zur Zulassungssteuerung in einem CDMA, auf das durch gemischte Dienste zugegriffen wird, die Folgendes umfasst:

Mittel, die auslegt sind, für jeden Dienst eine Kennlinie des Durchsatzes versus die empfangene Aufwärtsstreckengesamtleistung im Fall eines Zugriffs, der lediglich diesen einzelnen Dienst verwendet, zu ermitteln;
Mittel, die ausgelegt sind, eine vorhandene, empfangene Aufwärtsstreckengesamtleistung einer Zelle und eine gewünschte Dienstgeschwindigkeit und einen Signal-Rauschabstand eines neuen, anfordernden Dienstes zu ermitteln;
Mittel, die ausgelegt sind, für den Dienst des neuen, anfordernden Dienstes einen Dienstumfang in Form einer Anzahl der Anwender zu ermitteln, der eine empfangenen Gesamtleistung ergeben würde, die der vorhandenen, empfangenen Aufwärtsstreckengesamtleistung entspricht, wobei der berechnete Dienstumfang der äquivalente Dienstumfang genannt wird;

Mittel, die ausgelegt sind, einen Vorhersagewert der empfangenen Aufwärtsstreckengesamtleistung bei der Dienstgeschwindigkeit zu berechnen, während zum äquivalenten Dienstumfang eins addiert wird, und unter Verwendung der Kennlinie des neuen, anfordernden Dienstes, wobei die empfangene Aufwärtsstreckengesamtleistung bestimmt wird, die dem äquivalenten Dienstumfang plus eins bei der Dienstgeschwindigkeit entsprechen würde; und

Mittel, die ausgelegt sind, den Vorhersagewert der empfangenen Aufwärtsstreckengesamtleistung mit einem vorgegebenen Schwellenwert zu vergleichen und den neuen, anfordernden Dienst zuzulassen, wenn der Vorhersagewert kleiner als der vorgegebene Schwellenwert ist, oder andernfalls den Dienst abzulehnen.

24. Drahtloses CDMA-Kommunikationssystem, das eine drahtlose Netzsteuereinrichtung mit der Vorrichtung zur Zulassungssteuerung in Übereinstimmung mit Anspruch 23 umfasst.

## Revendications

1. Procédé de prédiction de puissance totale reçue en liaison montante dans un système CDMA auquel accèdent des services mixtes, comportant les actions consistant :

   étape 1, à obtenir pour chaque service une courbe caractéristique débit-puissance totale reçue en liaison montante dans le cas d'un accès n'utilisant que le service unique en question ;
   étape 2, à obtenir une puissance totale reçue actuelle en liaison montante d'une cellule, et un débit de service et un rapport signal-bruit souhaités d'un nouveau service appelant ;
   étape 3, à calculer uniquement pour la desserte du nouveau service appelant une quantité de service en nombre d'utilisateurs qui se traduirait par une puissance totale reçue correspondant à la puissance totale reçue actuelle en liaison montante en utilisant ladite courbe caractéristique du nouveau service appelant, la quantité de service calculée étant appelée quantité de service équivalente ; et
   étape 4, à calculer une valeur de prédiction de la puissance totale reçue en liaison montante en ajoutant un à la quantité de service équivalente audit débit de service et, en utilisant ladite courbe caractéristique du nouveau service appelant,
   à déterminer la puissance totale reçue en liaison montante qui correspondrait à la quantité de service équivalente plus un audit débit de service.

2. Procédé de prédiction de puissance totale reçue en liaison montante selon la revendication 1, l'étape 1 comportant les actions consistant à :

   i) obtenir une puissance totale reçue correspondante en liaison montante pendant un accès respectif par chaque service unique ;
   ii) ajuster des résultats obtenus à partir de l'étape i) qui précède pour obtenir la courbe caractéristique du débit en fonction de la puissance totale reçue en liaison montante dans le cas d'un service unique.

3. Procédé de prédiction de puissance totale reçue en liaison montante selon la revendication 2, l'étape i) comporte :

   i-1) calculer la puissance reçue correspondante en liaison montante pendant un accès respectif par chaque service unique ;
   i-2) calculer la puissance totale reçue en liaison montante correspondant respectivement à la puissance reçue en liaison montante à l'étape i-1).

4. Procédé de prédiction de puissance totale reçue en liaison montante selon la revendication 3, l'étape i-1) étant calculée par l'équation :

$$p_i = 10\log\left(10^{0.1B_g} + A(i-1)10^{0.1p_i}\right) - \left(P_G - \frac{E_b}{N_0}\right)$$

où $i$ est la quantité de service équivalente, $p_i$ est la puissance reçue en liaison montante correspondant à la quantité de service équivalente, $P_G$ est le gain de traitement, $B_g$ est le bruit de *fond, A* est un coefficient d'interférence de cellules adjacentes, et $\frac{E_b}{N_0}$ est le rapport signal-bruit du nouveau service appelant ; et l'étape i-2) étant calculée par l'équation :

$$p_{i\_total} = 10\log\left(10^{-0.1B_g} + i \times 10^{0.1p_i}\right)$$

où $p_{i\_total}$ est la puissance totale reçue en liaison montante correspondant à $p_i$.

**5.** Procédé de prédiction de puissance totale reçue en liaison montante selon la revendication 4, la première équation étant résolue par opération itérative lors de l'étape i-1), c'est-à-dire :

$$p_i^{(k+1)} = 10\log\left(10^{0.1B_g} + A(i-1)10^{0.1p_i^{(k)}}\right) - \left(P_G - \frac{E_b}{N_0}\right)$$

où k est le nombre d'itérations, et la valeur initiale itérée

$$p_i^{(0)} = B_g - \left(P_G - \frac{E_b}{N_0}\right).$$

**6.** Procédé de prédiction de puissance totale reçue en liaison montante selon la revendication 2, l'ajustement lors de l'étape ii) étant un ajustement par moindres carrés.

**7.** Procédé de prédiction de puissance totale reçue en liaison montante selon la revendication 1, la quantité de service équivalente étant calculée lors de l'étape 3 par les équations :

$$p_i = 10\log\left(10^{0.1B_g} + A(i-1)10^{0.1p_i}\right) - \left(P_G - \frac{E_b}{N_0}\right)$$

$$p_{i\_total} = 10\log\left(10^{-0.1B_g} + i \times 10^{0.1p_i}\right)$$

où $i$ est la quantité de service équivalente, $p_i$ est la puissance reçue en liaison montante correspondant à la quantité de service équivalente, $P_G$ est le gain de traitement, $B_g$ est le bruit de *fond, A* est coefficient d'interférence de cellules adjacentes, $\frac{E_b}{N_0}$ est le rapport signal-bruit du nouveau service appelant, et $p_{i\_total}$ est la puissance totale reçue en liaison montante.

**8.** Procédé de prédiction de puissance totale reçue en liaison montante selon la revendication 7, la quantité de service équivalente étant calculée lors de l'étape 3 par un système d'équations obtenu par les équations simultanées :

$$\begin{cases} i = 10^{-0.1p_i}\left(10^{0.1p_{i\_total}} - 10^{0.1B_g}\right) \\ p_i = 10\log\left[10^{0.1B_g} + A(i-1)10^{0.1p_i}\right] - \left[P_{G8} - \left(\frac{E_b}{N_0}\right)_8\right] \end{cases}$$

**9.** Procédé de prédiction de puissance totale reçue en liaison montante selon la revendication 8, la quantité de service équivalente étant calculée lors de l'étape 3 par itération du système d'équations simultanées :

$$\begin{cases} i^{(k+1)} = 10^{-0.1 p_i^{(k)}} \left( 10^{0.1 p_{i\_total}} - 10^{0.1 B_g} \right) \\ p_i^{(k+1)} = 10 \log \left[ 10^{0.1 B_E} + A(i^{(k)} - 1) 10^{0.1 p_i} \right] - \left[ P_{G8} - \left( \frac{E_b}{N_0} \right)_8 \right] \end{cases}$$

où la valeur initiale itérée est :

$$\begin{cases} i^{(0)} = 1.0 \\ p_i^{(0)} = B_g - P_{G8} + \left( \frac{E_b}{N_0} \right)_8 \end{cases}$$

**10.** Procédé de prédiction de puissance totale reçue en liaison montante selon la revendication 1, l'étape 4 comportant les actions consistant à :

a) calculer un débit prédit tout en ajoutant un à la quantité de service équivalente ;
b) calculer la valeur de prédiction de la puissance totale reçue en liaison montante du système correspondant au débit prédit.

**11.** Procédé de prédiction de puissance totale reçue en liaison montante selon la revendication 10, une prédiction de la puissance totale reçue en liaison montante correspondant au débit prédit étant calculée à l'étape b) en appliquant une interpolation à la courbe caractéristique dudit débit en fonction de la puissance totale reçue en liaison montante.

**12.** Procédé selon la revendication 1, comportant en outre les actions consistant :

étape 5, à comparer la valeur de prédiction de la puissance totale reçue en liaison montante avec un seuil prédéfini, à admettre le nouveau service appelant si la valeur de prédiction est inférieure audit seuil prédéfini, ou à le rejeter sinon.

**13.** Procédé selon la revendication 12, l'étape 1 comportant les actions consistant à :

i) obtenir une puissance totale reçue correspondante en liaison montante pendant un accès respectif par chaque service unique ;
ii) ajuster des résultats obtenus à partir de l'étape i) qui précède pour obtenir une illustration mathématique de la courbe caractéristique du débit en fonction de la puissance totale reçue en liaison montante dans le cas d'un service unique.

**14.** Procédé selon la revendication 13, l'étape i) comporte :

i-1) calculer une puissance reçue correspondante en liaison montante pendant un accès respectif par chaque service unique ;
i-2) calculer la puissance totale reçue en liaison montante correspondant respectivement à la puissance reçue en liaison montante à l'étape i-1).

**15.** Procédé selon la revendication 14, l'étape i-1) étant calculée par l'équation :

$$p_i = 10 \log \left( 10^{0.1 B_g} + A(i-1) 10^{0.1 p_i} \right) - \left( P_G - \frac{E_b}{N_0} \right)$$

où $i$ est la quantité de service équivalente, $p_i$ est la puissance reçue en liaison montante correspondant à la quantité de service équivalente, $P_G$ est le gain de traitement, $B_g$ est le bruit de *fond*, $A$ est coefficient d'interférence de cellules

adjacentes, et $\dfrac{E_b}{N_0}$ est le rapport signal-bruit du nouveau service appelant ; et l'étape i-2) étant calculée par l'équation :

$$p_{i\_total} = 10\log\left(10^{-0.1B_g} + i \times 10^{0.1p_i}\right)$$

où $p_{i\_total}$ est la puissance totale reçue en liaison montante correspondant à $p_i$.

**16.** Procédé selon la revendication 15, la première équation étant résolue par opération itérative lors de l'étape i-1), c'est-à-dire :

$$p_i^{(k+1)} = 10\log\left(10^{0.1B_g} + A(i-1)10^{0.1p_i^{(k)}}\right) - \left(P_G - \dfrac{E_b}{N_0}\right)$$

où k est le nombre d'itérations, et la valeur initiale itérée

$$p_i^{(0)} = B_g - \left(P_G - \dfrac{E_b}{N_0}\right).$$

**17.** Procédé selon la revendication 13, l'ajustement lors de l'étape ii) étant un ajustement par moindres carrés.

**18.** Procédé selon la revendication 12, la quantité de service équivalente étant calculée lors de l'étape 3 par les équations :

$$p_i = 10\log\left(10^{0.1B_g} + A(i-1)10^{0.1p_i}\right) - \left(P_G - \dfrac{E_b}{N_0}\right)$$

$$p_{i\_total} = 10\log\left(10^{-0.1B_g} + i \times 10^{0.1p_i}\right)$$

où $i$ est la quantité de service équivalente, $p_i$ est la puissance reçue en liaison montante correspondant à la quantité de service équivalente, $P_G$ est le gain de traitement, $B_g$ est le bruit de *fond, A* est coefficient d'interférence de cellules adjacentes, $\dfrac{E_b}{N_0}$ est le rapport signal-bruit du nouveau service appelant, et $p_{i\_total}$ est la puissance totale reçue en liaison montante.

**19.** Procédé selon la revendication 18, la quantité de service équivalente étant calculée lors de l'étape 3 par un système d'équations obtenu par les équations simultanées

$$\begin{cases} i = 10^{-0.1p_i}\left(10^{0.1p_{i\_total}} - 10^{0.1B_g}\right) \\ p_i = 10\log\left[10^{0.1B_g} + A(i-1)10^{0.1p_i}\right] - \left[P_{G8} - \left(\dfrac{E_b}{N_0}\right)_8\right] \end{cases}$$

**20.** Procédé selon la revendication 19, la quantité de service équivalente étant calculée lors de l'étape 3 par itération du système d'équations simultanées :

$$\begin{cases} i^{(k+1)} = 10^{-0.1 p_i^{(k)}} \left( 10^{0.1 p_{i\_total}} - 10^{0.1 B_g} \right) \\ p_i^{(k+1)} = 10 \log \left[ 10^{0.1 B_g} + A(i^{(k)} - 1) 10^{0.1 p_i} \right] - \left[ P_{G8} - \left( \frac{E_b}{N_0} \right)_8 \right] \end{cases}$$

où la valeur initiale itérée est :

$$\begin{cases} i^{(0)} = 1.0 \\ p_i^{(0)} = B_g - P_{G8} + \left( \frac{E_b}{N_0} \right)_8 \end{cases}$$

**21.** Procédé selon la revendication 12, l'étape 4 comportant les actions consistant à :

a) calculer un débit prédit tout en ajoutant un à la quantité de service équivalente ;
b) calculer la valeur de prédiction de la puissance totale reçue en liaison montante du système correspondant au débit prédit.

**22.** Procédé selon la revendication 21, une prédiction de la puissance totale reçue en liaison montante étant calculée, correspondant au débit prédit lors de l'étape b) en appliquant une interpolation à la courbe caractéristique dudit débit en fonction de la puissance totale reçue en liaison montante.

**23.** Dispositif de contrôle d'admission dans un CDMA auquel accèdent des services mixtes, comportant :

des moyens prévus pour obtenir pour chaque service une courbe caractéristique débit-puissance totale reçue en liaison montante dans le cas d'un accès n'utilisant que le service unique en question ;
des moyens prévus pour obtenir une puissance totale reçue actuelle en liaison montante d'une cellule, et un débit de service et un rapport signal-bruit souhaités d'un nouveau service appelant ;
des moyens prévus pour calculer, pour la desserte du nouveau service appelant, une quantité de service en nombre d'utilisateurs qui se traduirait par une puissance totale reçue correspondant à la puissance totale reçue actuelle en liaison montante, la quantité de service calculée étant appelée quantité de service équivalente ;
des moyens prévus pour calculer une valeur de prédiction de la puissance totale reçue en liaison montante tout en ajoutant un à la quantité de service équivalente audit débit de service et, en utilisant ladite courbe caractéristique du nouveau service appelant, déterminer la puissance totale reçue en liaison montante qui correspondrait à la quantité de service équivalente plus un audit débit de service ;
et
des moyens prévus pour comparer la valeur de prédiction de la puissance totale reçue en liaison montante avec un seuil prédéfini, et pour admettre le nouveau service appelant si la valeur de prédiction est inférieure audit seuil prédéfini, ou pour le rejeter sinon.

**24.** système de communications sans fil CDMA comportant un contrôleur de réseau sans fil muni du dispositif de contrôle d'admission selon la revendication 23.

100

obtaining a characteristic relation curve of a throughout versus the uplink received total power in the case of only single service for each service

105

obtaining Pi_meas of a cell and $R$ and $E_b/N_0$ of a new calling service

110

calculating current converted service amount *i_current* in the case of single service

115

calculating the uplink received total power while *i_current+1* as the prediction value

Figure 1

Figure 2

Figure 3

Figure 4

Figure 5A

Figure 5B

Figure 6A

Figure 6B

Figure 7A

Figure 7B

Figure 8A

Figure 8B

obtaining a characteristic relation curve of a throughout versus the uplink received total power in the case of only single service for each service — 100

obtaining Pi_meas of a cell and $R$ and $E_b/N_0$ of a new calling service — 105

calculating current converted service amount *i_current* in the case of single service — 110

calculating the uplink received total power while *i_current+1* as the prediction value — 115

prediction value<admission control threshold? — 120

no

rejecting — 125

yes — 130

admission

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5687171 A

**Non-patent literature cited in the description**

- **KURI J ; MERMELSTEIN P.** Call admission on the uplink of a CDMA system based on total received power. *IEEE INTERNATIONAL CONFERENCE ON COMMUNICATIONS,* 06 June 1999, vol. 3, 1431-1436

- Admission control in future multi-service wideband direct-sequence CDMA systems. **HJELM B.** VEHICULAR TECHNOLOGY CONFERENCE. IEEE, 24 September 2000, vol. 3, 1086-1093